# NEW EUROPEAN PATENT SPECIFICATION

(11) **EP 0 458 874 B2**
(45) Date of publication and mention of the opposition decision: **30.06.1999**
(45) Mention of the grant of the patent: 30.08.1995
(21) Application number: 90903632.9
(22) Date of filing: 15.02.1990
(51) Int. Cl.: G05B 15/00, D03D 49/00, D04B 35/00, B65H 59/00

(54) **ARRANGEMENT FOR CONTROLLING AND/OR SUPERVISING IN THE FIRST INSTANCE YARN FEED ELEMENTS/YARN FEED FUNCTIONS IN OR ON A TEXTILE MACHINE**
ANORDNUNG FÜR DIE STEUERUNG UND/ODER ÜBERWACHUNG, AN ERSTER STELLE VON FADENZUFUHRVORRICHTUNGEN/FADENZUFUHRFUNKTIONEN IN ODER AUF EINER TEXTILMASCHINE
AGENCEMENT SERVANT A COMMANDER ET/OU A SUPERVISER DES ELEMENTS/FONCTIONS, EN PREMIER LIEU DES ELEMENTS/FONCTIONS DE DEVIDAGE DU FIL, DANS OU SUR UNE MACHINE TEXTILE

(30) Priority: 16.02.1989 SE 8900534
(43) Date of publication of application: 04.12.1991
(73) Proprietor: IRO AB, S-523 01 Ulricehamn (SE)
(72) Inventor: FREDRIKSSON, Lars-Berno, S-511 57 Kinna (SE)
(74) Representative: Grünecker, Kinkeldey, Stockmair & Schwanhäusser Anwaltssozietät
(86) International application number: PCT/SE90/00097
(87) International publication number: WO 90/09624

(56) References cited:
- EP-A- 278 802
- EP-A- 302 364
- US-A- 3 817 059
- TEXTNET, Datennetzwerk für den Einsatz in der textilen Fertigung, Spezifikation der Sicherungsschicht und Übertragungstechnik, Schlafhorst & Co., Mönchengladbach (DE), pages 1-25, 1988
- Jordan P., Controller Area Network, Journal of Electronics & Wireless World (UK), vol.94, no. 1630, pages 816-819, August 1988
- The brochure Profile-Reed-Type AIR JET LOOM MODEL JA of Toyota Automatic Loom Works Ltd.(JP), 16 pages, May 1988
- The magazine "Webmaschinen-Bulletin Sulzer-Rüti", Nr.9/87, pages 1,2,46-52, September 1987(CH)
- 82526 Serial Communications Controller Architectural Overview, Intel Corporation(US), pages 1-34, January 1989
- The article "Controller Area Networks and the Protocol CAN for Machine Control Systems" by Lars-Berno Fredrikson in Mechatronics, Vol.4, No.2, pages 159-172, Head.Hill Hall, Oxford published by Elsevier Science Ltd, Great Britain 1994

## Description

The invention relates to an apparatus as disclosed in the preamble part of claim 1.

EP-A2-0 302 364 relates to a computerized controlling and supervising system for a textile machine like a loom. A host computer communicates with one of several parallel personal computers which are connected to controllers of the textile machine. Data files are unloaded from the host computer and the personal computers into the controllers for the components of the textile machine. Said components and a plurality of sensors provided in the textile machine communicate via terminal units for data collection with the personal computers. The arrangement permits the textile machine to operate independently of the host computer and of the network. The operating status of the textile machine is collected by the supervisory personal computers. Specific data used for the operation and control of the textile machine can be input via the controllers.

EP-A-0 278 802 discloses a commanding and protecting computerized system for an industrial process. A supervising unit communicates with a programmable unit which subsequently controls the process via a commanding and protecting unit and via a first communication path for simple shaped messages. Simultaneously, the supervising unit communicates with the commanding and protecting units via a secondary transmission path for more complex messages. Both transmission paths operate on a bidirectional basis.

In a textile machine like a weaving machine, there is a need for standardized kinds of connection. The computerized supervising and controlling system ought to be able to work rapidly and functionally reliably with short reaction times and on a real time basis.

It is a task of the invention to achieve in the computerized system a message transmission which takes place accurately and with such speed that events which have occurred in the system are detected sufficiently rapidly in the places where the events occurred are to be acted upon.

In an apparatus according to the invention each unit is connected to a connection which forms part of the network and at which message transmission within the system takes place serially and digitally. The message transmission consists of message types which are ranked in priority. The units and connections are arranged so as to discriminate in the message transmission effected and guarantee a transmission time of a finally transmitted message between units concerned, or unit concerned and other communication part within the system, of a maximum of 2.0 ms for at least three different messages representing trigger signals which are attributable to selected elements, functions or textile machine functions. Time-critical messages are not obstructed by other less important messages. Each message is relatively short. An important message is not obstructed by a long or unimportant message. Faults are detected with the aid of parity bits and control bits which form part of the message. A digital communication protocol with standardized characteristics can be used. This opens up the possibility that any piece of equipment can be connected together with any other. A common type of connection is proposed for all types of equipment concerned. An input and an output are thus obtained in which the variants are obtained by means of different encoding and interpretation of the serially transmitted data.

The prioritization is based upon the fact that information is to be transmitted between the units. This transmission takes place via the serial connection and means that an asynchronous process is carried out in time. Collision between simultaneous transmissions from the units is avoided by prioritization. Two logic levels are utilized, one of which is dominant and the other non-dominant. Irrespective of how many of the transmitters transmit a bit which is non-dominant, a dominant bit will be received if a unit transmits a dominant bit at the same time. When a unit starts to transmit, this is detected by all connected units within a predetermined time. Each unit furthermore interrupts its transmission immediately it detects that the transmission is occupied by one which is transmitting a dominant bit when the unit itself is transmitting a non-dominant bit.

Preferred embodiments are contained in the depending claims.

Embodiments of apparatuses are described below with the help of drawings, in which:
- Figure 1: shows a skeleton diagram of a part of a weaving machine with a system for control and supervision,
- Figure 2: shows a first type of a message,
- Figure 3: shows another type of a message,
- Figure 4: shows, in the form of a block diagram, connection of units to the connection,
- Figures 5-7: show, in diagram form, signal trains,
- Figure 8: shows, in the form of a block diagram, different constructions of units,
- Figure 9: shows a block diagram, of a weaving machine,
- Figure 10: shows a block diagram of a computer system of a flat knitting machine,
- Figure 11: shows in perspective the connection of a computer system to a KETTEN machine,
- Figure 12: shows a unit interacting with an execution element,
- Figure 13: shows a number of units and execution elements according to Figure 12 connected to a digital and serial connection,
- Figure 14: shows in principle a dobby (shaft weaving machine) comprising a computer system.
- Figure 15: shows a skeleton diagram of a shaft, similar to Figure 9. and
- Figure 16: shows a skeleton diagram of the connection of units and execution elements according to Figure 15 to a communication line for serial and digital transmission.

The invention will be explained first for controlling yarn feed elements in a textile machine. A system controls the yarn feed elements of a textile machine, e.g. a wearing machine for weaving of free pattern multi-colour weaving. With a variable speed control of the yarn winding-on element of each feed element it is ensured that all feed elements form a yarn stock from a yarn supply, which permits at every moment a yarn consumption determined by the weaving pattern programmed or stored in a control element.

The system also is able to limit the maximum speed of the yarn feed element. All feed elements provide information regarding the yarn consumption to a central unit on the weaving machine. The central unit adds the reported yarn consumptions and calculates the maximum yarn consumption. Since during one pattern report no feed element has a higher consumption than the total consumption, the latter can be used as a limit and transmitted back.

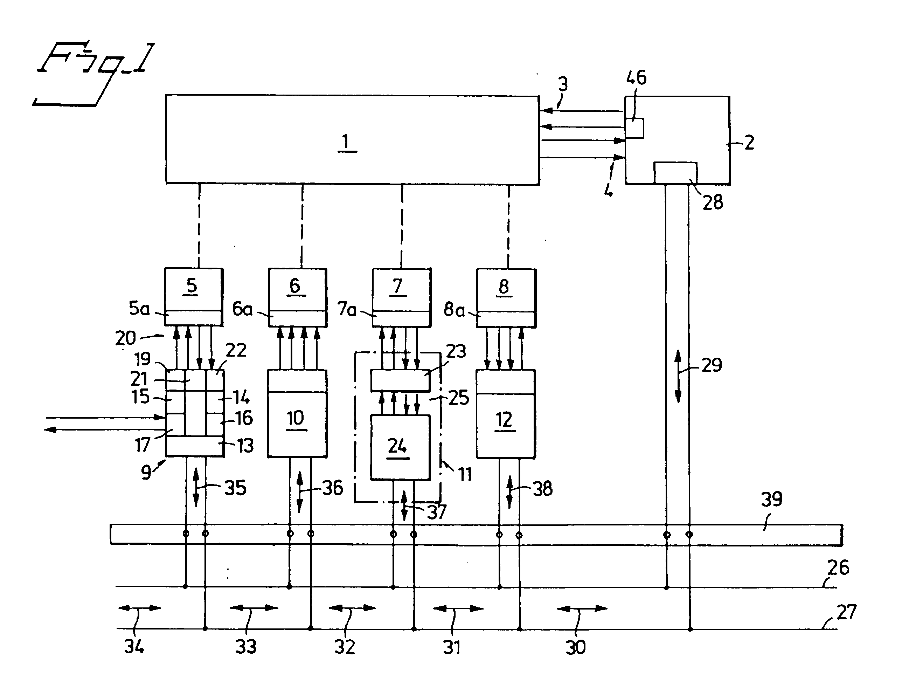

In Figure 1, a textile machine 1 is a weaving machine or a knitting machine. By means of a supervising computer system 2 different functions of the machine are controllable and supervisable. The connections between the system 2 and the machine 1 are symbolized with 3 and 4. Yarn feed elements 5, 6, 7 and 8 are connected to the machine 1.

Each feed element has electrical connection parts 5a, 6a, 7a and 8a and has assigned a function control unit 9, 10, 11 and 12 respectively. The units may be physically located close to each feed element. Each unit comprises at least one micro-computer (advanced digital circuit) 13, 14 for serial interface control and serial bit flow processing. Memory circuit 15 (RAM, ROM) and a clock circuit 16 are included. There can be circuits for time logic, fault processing etc. Via a communication port 17 read-in and read-out elements can be connected via connections 18 for entering and retrieval of information. Each unit comprises a second micro-computer 19 for effecting the operation or/and supervision of the feed element. In the second micro-computer, calculations can be carried out for optimum control and supervision of each feeder via the connection 20. The second micro-computer 19 comprises peripherals such as memory circuits 21, communication circuits 22 etc. The connection interface comprises A/D and D/A circuits, communication terminals, pulse outputs etc. The second micro-computer 19 can be integrated in the unit 9 or alternatively constitute a separate unit. There can be a connection of the second micro-computer 23 to a separate communication control part 24, apart from the second micro-computer 19 both communicating via a connection interface 25 for parallel communication. The units 9-12 can be constructed with identical connection interfaces for individual interchangeability among the units. Any unit then can take the place of another unit, at least after a minor adjustment.

The units 9-12 and the system 2 are connected to a two-wire connection 26, 27 for serial message transmission. The system 2 can comprise at least one control computer 28 as a supervising computer for the units 9-12 which function as slaves. Bidirectional or unidirectional message transmission between the control computer and the units or between the units is symbolized with arrows 29-38. The different computer systems can work in parallel or with a supervising and subordinate system. Each unit can be provided with more than one part 13, and each part 13 is connected to its connection which affects the unit in question. Two units connected via e.g. the main connection, can communicate internally.

The units are connected to the digital connection 26, 27 (data bus) via terminal elements 39 which can be a pair of screws. Message exchange can take place with messages of different types. The bit flow which is effected between the units or between the units and the control element(s) in the digital data bus is arranged in said messages of which one message type comprises a data field and a frame part. The frame can be executed with markings or addresses for the units. Each unit receives and stores its address which are assigned in the system. Alternatively, the system can operate with a certain order for the units. With a supervising computer 28 the system can work with a start-up phase, in which control information is issued for selection of functions. e.g. depending upon a programmed or selected weaving pattern, and a working phase in which functions are diagnosed, supervised, controlled for optimum function performance etc., and effected. The yarn quantity can be measured, the yarn tension supervised etc. The feed elements can work with a feedback function e.g. to control a locking element function for the yarn measurement, retention and winding-off from the feeder drum.

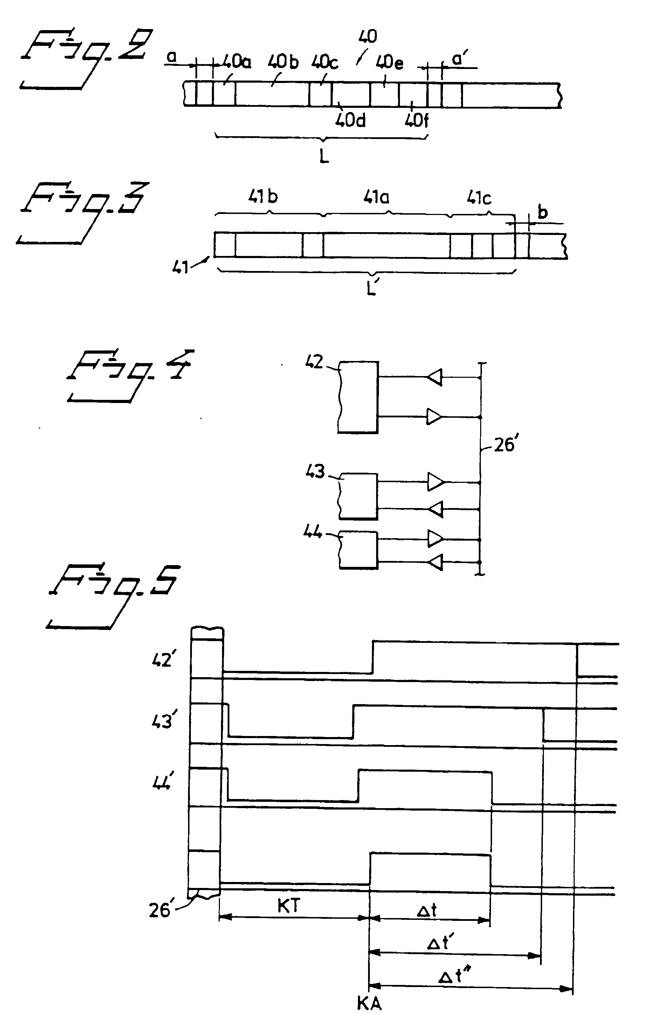

At least two message types are utilized, one message type being given priority over other message types at the digital serial connection. Figure 2 shows a first type 40 of message having a frame part with the same length L as the message. The frame is constructed with different fields, e.g. a start field 40a, a priority field 40b, a control bit field 40c, a total control field 40d, and acknowledgement and completion fields 40e and 40f. The content in the priority field determines the priority ranking of the message. All messages appearing at the connection are mutually ranked. Instantaneous messages 40 (trigger signals) leave the highest priority. Normal communication messages have priorities according to the time requirement. Pick signals, yarn break signals, arrival signals, feed element exchange signals etc. have the highest priorities. Informations regarding the long-term functional working in the textile machine have lower priority.

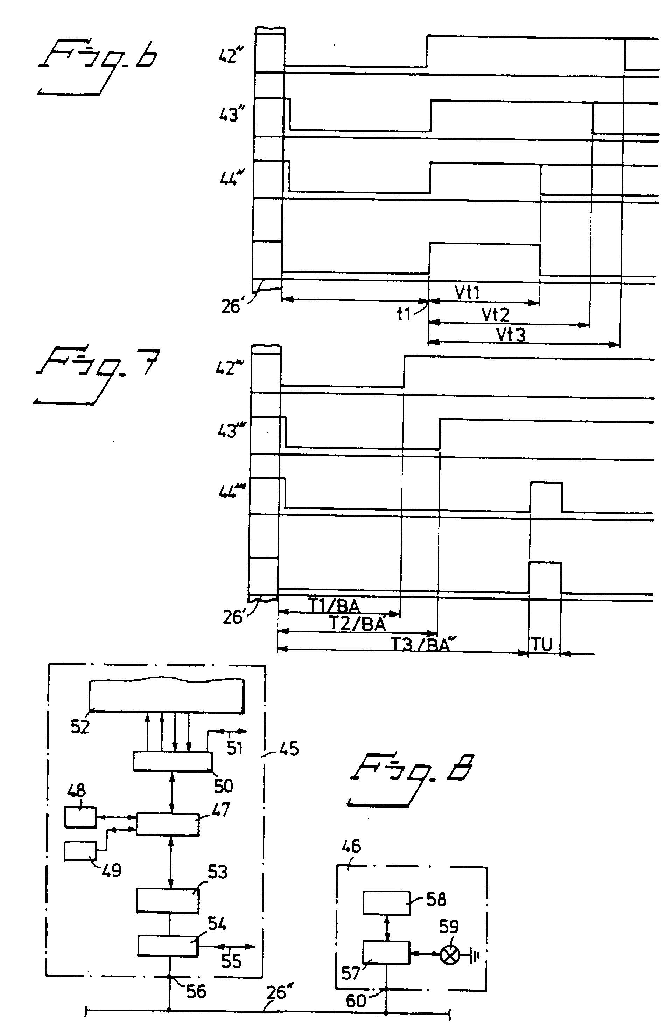

A second message type 41 (Fig 3) has, in principle the same construction as message type 40. Message 41 comprises a data field 41a. The frame in message 41 consists of fields 41b and 41c. The data field 41a contains information which is to be transmitted between the units.

The communication transmission works bit-synchronously in priority selection. The messages have relatively short lengths L and L'. A message of lower ranking does not obstruct a message of higher ranking for any length of time in the event of transmission of the latter message taking place when a unit with a higher ranked message wishes access to the connection. The message length L' can be selected in the order of magnitude 0.05 - 0,1 ms (at 1 Mbit/sec). The distances a, a' and b respectively are selected with great accuracy. Bit speeds of e.g. 1 Mbit/sec or higher, e.g. 4 Mbit/sec, are utilized. Two different types of logic levels can be used, the first logic level being a dominant level and consisting of "0" and the second logic level being a non-dominant level with "1". By using said two levels, prioritization and fault detection are made. If more transmitters transmit a dominant level, this will be received in the communication, irrespective of how many are transmitting a non-dominant level. As a bit fault in the communication appears in 100% of all faults are detected, because the transmitting unit registers that faults occur when the bit emerges in the communication. For faults which only occur in the receiving unit the following conditions apply. If more than five bits are faults, detection of the fault takes place to 100% and this applies irrespective of how these five faults are spread in the message. If the number of faulty bits is odd, detection always takes place. As for the remaining types of faults (2 or 4 faulty bits), these are detected with a probability of 1133000. The transmission of a bit is effected by means of the transmitted bit being divided up into five parts. The first part is a synchronizing part which normally starts the bit. The second part consists of an increase part (time increase part), with which the bit is increased in the event of resynchronization. Athird part relates to a first delay part which is attributable to a time interval, during which a stable level is obtained. At the end of this time, the value of the bit is read off. The fourth part consists of a second delay part, which forms a time interval in order that the circuit may determine internally whether it is the current unit which is to transmit the coming bit and which bit is to be transmitted in such a case. The fifth part is attributable to a reduction part which can be removed in the event of resynchronization. The communication part can be complemented with a micro-processor.

In one embodiment all units which want to have access to the connection start to transmit their message as soon as there is a free space at the connection. The different messages have different priority, which means that all messages with lower priority are interrupted and only the message with the highest priority is completed. All units connected to can read the transmitted message. The units are adjusted to receive an assigned message and pick it up and, depending upon the message, carry out the function in question or pick up an actual piece of information. A receiving unit can e.g. transmit an acknowledgement bit when it considers it has received a correct message. Another possibility is that the receiving unit answers by means of transmitting a message back depending upon a received message.

The transmission consists of an asynchronous process which is carried out serially in time. The system prevents collisions between different messages. In one embodiment prioritization takes place in the transmitted message, so that any unit can transmit to any unit without problems. In addition to the system working with two logic levels, all connected units are capable of detecting within a fixed time when a unit starts to transmit so that the digital levels in the communication can be made stable when the units are reading off the bit. Each unit interrupts its transmission when it detects a message with a dominant bit while transmitting a non-dominant bit. Transmitting units start transmission randomly. It is extremely improbable that two units start to transmit simultaneously (they have to start transmission within the same 100 - 300 ns at a bit frequency of 1 MHz). When transmissions nevertheless start simultaneously a selection is made by means of prioritization. The problem arises when a transmitting unit cannot transmit because the connection is occupied. When the connection then becomes free, there will be several messages waiting in turn to be transmitted. When a message is completed, all units must start transmissions in a time interval of approximately 10% of the bit period, i.e 100 - 300 ns at a bit frequency of 1 MHz. A manner of ordering priority is thus that after a completed message, the units receive different delays before they can start transmission. The unit which has the highest priority has the shortest waiting time.

The waiting time with a maximum transmission speed can be 148 µs (2 x 111 bits) plus the time for the processor to process the information. The minimum transmission time is half of the maximum. By only allowing, at sensitive moments, transmission of messages without data, this time can be reduced to 62 µs. These calculations are made with a bit frequency of 1.5 Mbitlsec and on the assumption that the transmitted message has the highest priority. The circuit has the possibility of interrupting a transmission by transmitting a fault frame, when faults are discovered in the communication. All units then interrupt reading-in and disregard all information read in. An important message can be transmitted directly afterwards. This should reduce the responce time to a maximum of 44 and a minimum of 40 µs.

For messages which comprise a predetermined number of bits with the same level in succession, the transmission works with a bit which is inverse and follows the predetermined number (e.g. 5). The inverse bit can be selected to form part of the message. Interference is thus prevented from locking the connection. In the event of faults, all units transmit e.g. six dominant bits in succession as a sign that they have perceived the fault. All units then transmit e.g. six non-dominant bits. The communication then is restored. Each unit is ready to start transmitting. Each unit which received the faulty message discards it and the unit which sent the message from the start resends. By these means, speeding up of alarm messages is brought about.

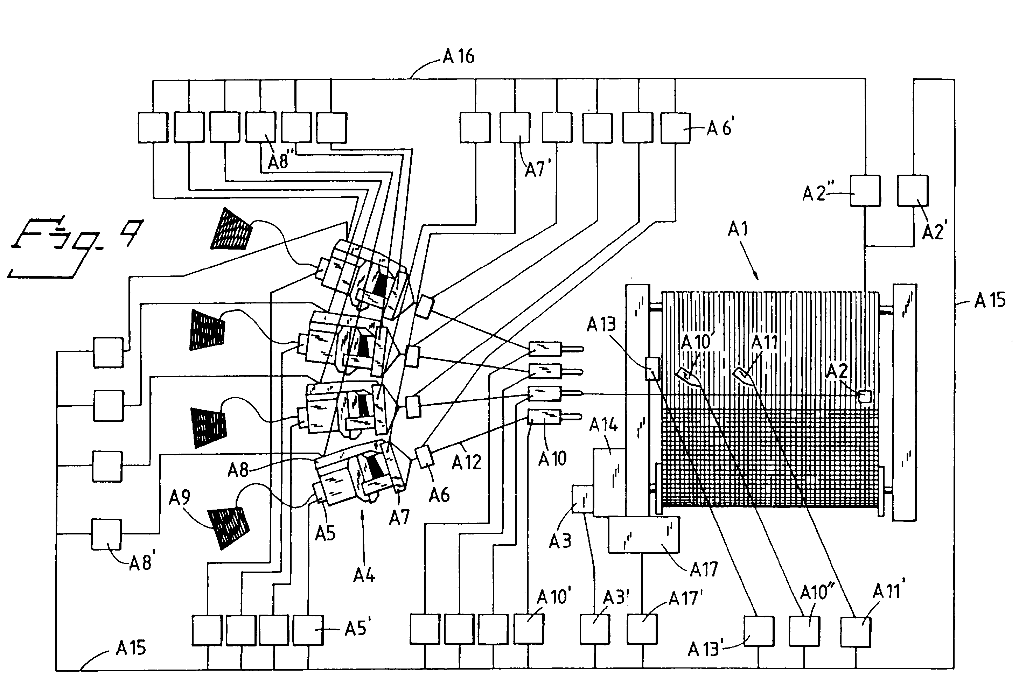

Figure 4 shows three units 42, 43 and 44 connected to connection 26'. The following table shows how the priority selection is arranged in a first example. The message of unit 44 has most dominant levels and has highest priority.

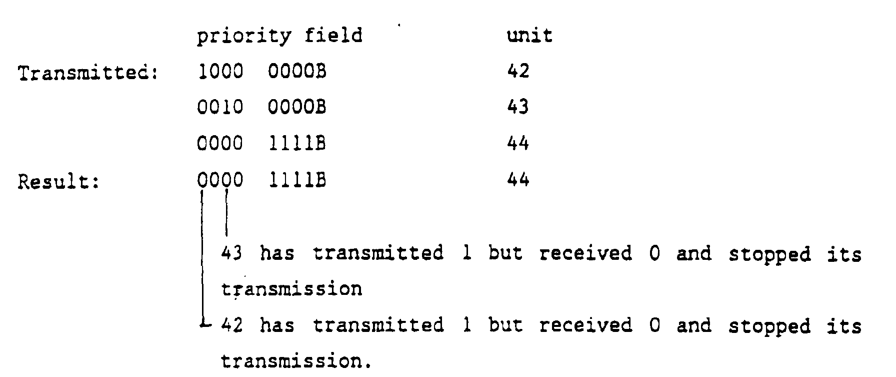

In another case according to the table as shown above prioritization takes place in one part of the message. A "1" indicates a non-dominant level and a "0" a low level. Different bit spaces are provided. When one unit compares the transmitted bit in a bit space with the state received in the communication, the unit notes when the non-dominant level has been overwritten by a dominant one. The unit interrupts its transmission. At another bit space a next unit makes the same observation of the difference between the transmitted bit value and that which the unit sees in the communication, for which reason the transmission is interrupted. At a further bit space a further unit notes that it had the highest priority since it never had to interrupt its transmission and consequently completes the message. The message can consist of both "1" and "0".

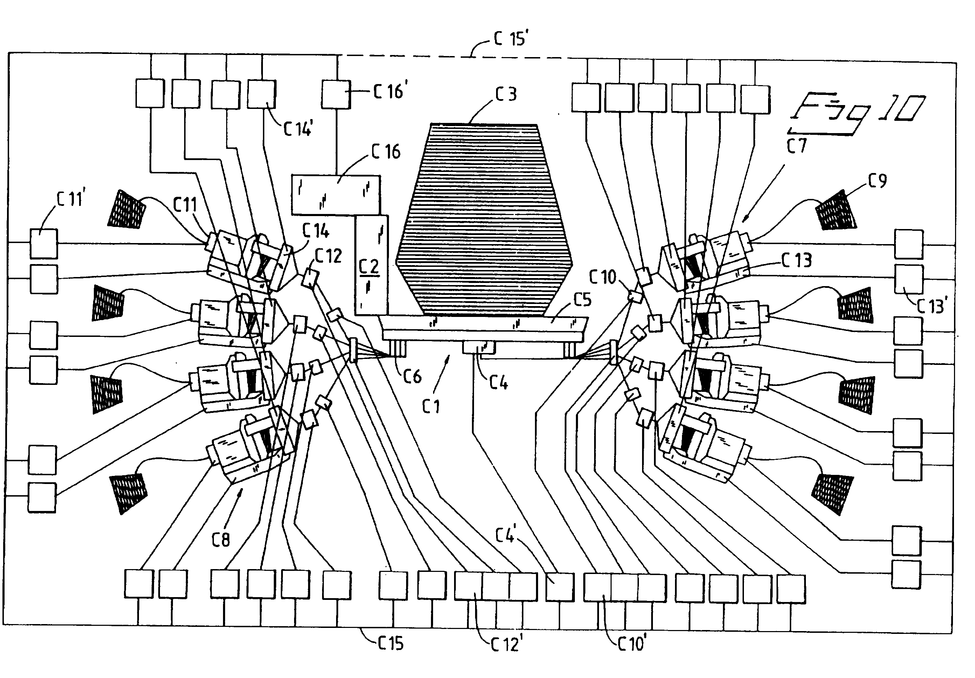

Figure 5 shows collision detection known per se. The units 42', 43' and 44' are assigned different waiting times Δt, Δt' and Δt" after collision. Unit 42' receives priority at the connection. In the event of a simultaneous starts there is a slight risk that a unit can not detect that another is transmitting simultaneously. After a short time interval, the transmitting unit indicate that their transmission is colliding and goes into a fault detecting phase in order to complete the message and indicate to other units that the transmission has collided. The completion is carried out in such a manner that all units involved transmit a sequence of dominant bits which overlap one another so that by these means a clear and marked completion of the collision can be detected by all units. From a time KA, all units wait a predetermined time. The unit with the highest priority waits the shortest time before it starts.

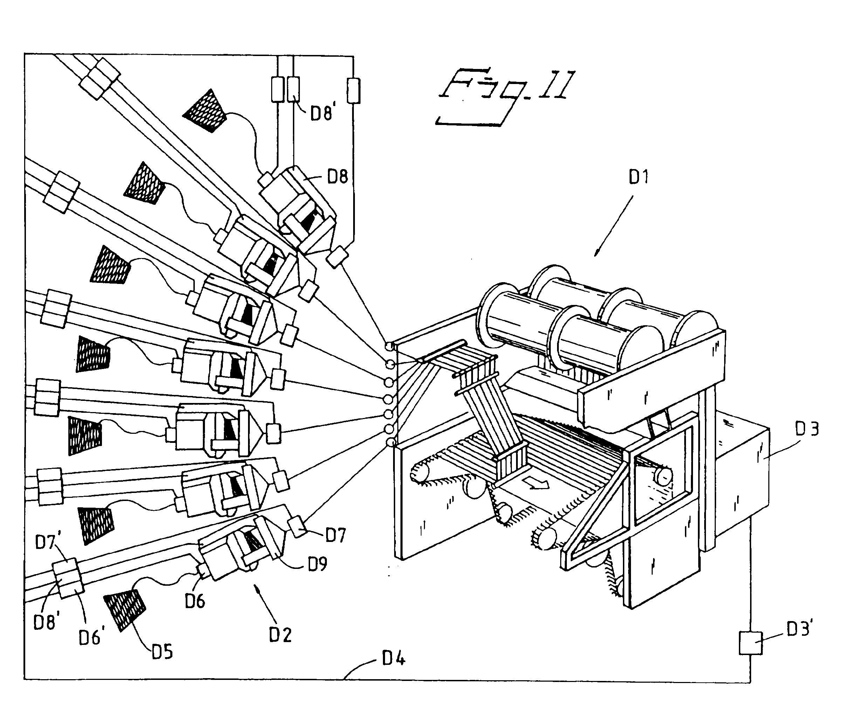

Figure 6 shows a mechanically guided collision in which dominant levels are first transmitted to indicate that the unit wish to transmit. The units 42", 43" and 44" are assigned different waiting times vt1, vt2 and vt3 after all units have finished transmitting dominant bits. The unit (42") with the shortest wait time (vt1) thus gains priority to the connection. The edges of the pulse trains must be kept to the time t1 with great accuracy (e.g. 100 nanosec). The units in Figure 6 do not start to transmit any message without starting by transmitting the sequence which in the case according to Figure 5 indicates a collision. A collision is thus signalled irrespective of whether any other unit is transmitting or not. The prioritization otherwise takes place in the same manner as in the case according to Figure 5. In Figure 6 the delay is constant and the collision indication does not need to be carried out. A disadvantage in relation to Figure 5 is that the prioritization takes a certain time even if there is only one unit which is to transmit.

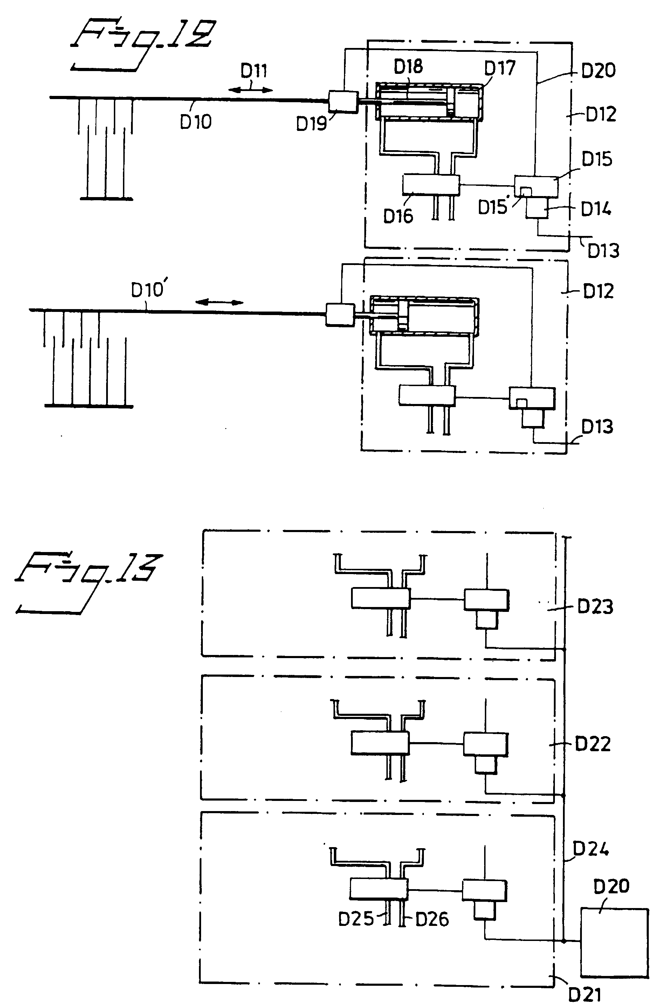

Figure 7 shows another example of priority selection for units 42"', 43"' and 44"'. The starting point is the number of bits BA, BA' and BA" or different times T1, T2 and T3 respectively in the respective message. The message for the unit (44"') with the greatest number (BA") receives the transmission state. The start sequence is used for prioritization. The length of the start sequence varies. The unit with the longest start sequence is the last to stop with its start sequence and has the highest priority. After prioritization, a certain time TU is used to darify that the unit can transmit

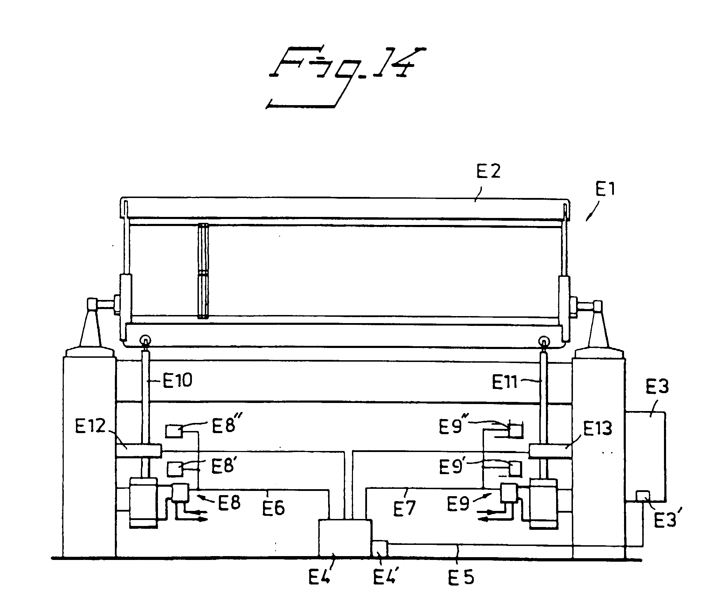

Figure 8 shows units 45 and 46 of different types. Unit 45 is highly intelligent. Unit 46 being of a simpler type. The unit 45 has a microcomputer 47 which is connected to memory areas 48, 49, e.g. in the form of RAM or ROM memories respectively. The micro-computer 47 works into a connection interface 50 which comprises D/A and AID converters. Also induded are counters, pulse outputs and pulse inputs. The connection interface 50 can also be provided with a communication terminal 51. The connection interface works into an electromechanical part 52 belonging to an element in the textile machine. The microcomputer 47 also works into a communication part 53 which comprise at least one micro-computer or an advanced circuit. A circuit 54 which in particular configures the unit 45 can be included. Said circuit 54 is provided with inputs and outputs 55. The unit 45 is connected via an output 56 to the digital connection 26". The unit 46 consists of a communication part 57 which is connected to a transmitter element 58 and an indication element 59 and/or an execution element 59'. The unit 46 has an output 60 shows is connected to the connection 26".

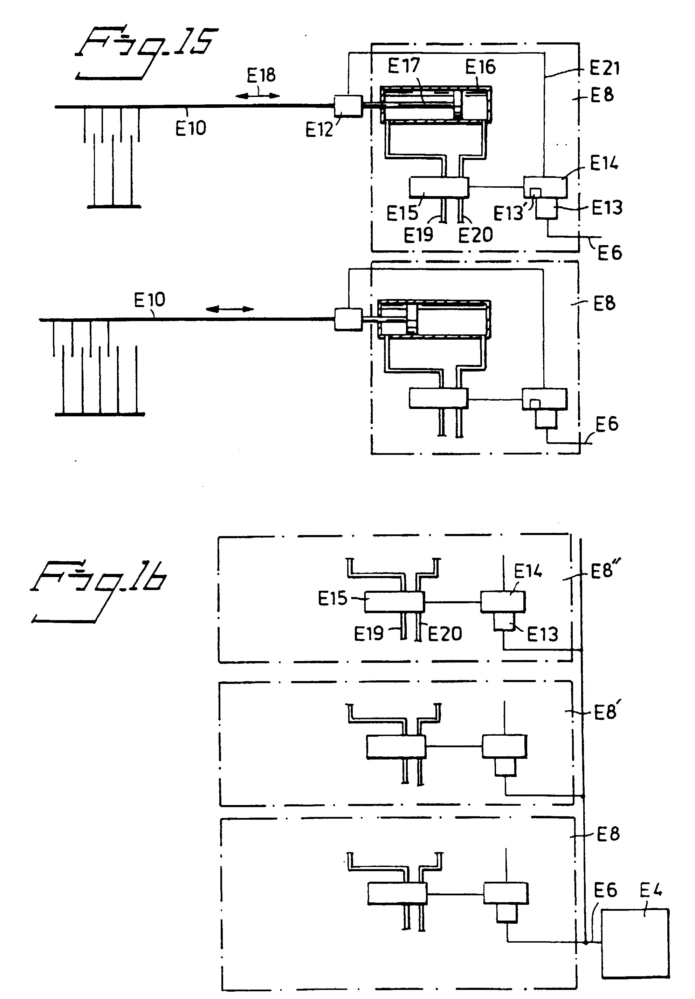

Figure 9 shows an airjet weaving machine A1 with arrival detectors A2 and reference transmitters A3 for the machine angle. E.g four feed elements A4 belong to the machine. Each is provided with inward and outward yarn monitors A5 and A6, a yarn measuring device A7, a motor control element A8, and a yarn stock A9. Each feeder is assigned a main nozzle A10 and relay nozzles A10', A11 in the shed. The yarn is named A12. Cutting elements A13 and the drive of the weaving machine Al are symbolized with A14. The machine A1 is controlled and supervised by two computerized systems with serial digital connections A15, A16 in each system. The computerized control system of the weaving loom is indicated with A17. The units provided have the same reference indications as their associated elements, but comppleted with primes.

Similar elements (e.g. the main nozzles for each feed element) have an own unit. Elements also can share one unit or be connected in pairs to one unit. Other units (e.g for the motor control elements A8) can be connected to two units A8', A8". Control unit A17 is connected to unit A17' and the arrival sensor A2 is connected to both systems via units A2' and A2".

The apparatus of Figure 1 and Fig 9 works with a start-up phase and an operation phase. For the start-up, each feed element has got an identification number, e.g with a code being received in the terminal contact. For the start-up phase each feed element reads its identification code via the communication transmission effected from a supervising unit. The textile machine informs the system of its breadth and working speed and further informs the each feed element of the up coming pick sequence number, e.g. 16, for the machine speeds most closely corresponding to the number. The weaving machine also informs how much time will expire after a reference signal before the feed element has to release the thread. The respective feed element prepares itself by taking up an optimum thread stock and adjusting itself to optimum maximum speed.

The operation phase is started by a weaving machine start signal to the system. Every cyde the reference transmitter A3 issues a reference signal. A feed element concerned to release yarn, counts the time until the release time and releases yarn. The arrival monitor A2 gives a message when the yarn passes. Thereafter, the sequence is repeated, reckoned from the reference signal of the reference transmitter, e.g. a further seven times. Thereafter, the weaving machine gives a pick sequence of a number of picks, e.g. eight picks, which are to come after the remaining picks, in this case eight picks, which have already been given. Once again the sequence is repeated from the stage at which a reference signal is received when the reference transmitter A3 is passed. In the operation phase, different types of message according to Figures 2 and 3 are thus called for. The start signal of the weaving machine is a typical instantaneous trigger message, as well as the signals from the reference transmitter, the activation signals of the stop elements in the feed elements, and the signals from the arrival monitor. These signals have priority. Messages as speed information have lower priorities and can be stored on the first-in-first-out principle.

The weaving machine of Figure 9 is equipped with a nozzle control for main and relay nozzles A10, A10' and A11. The nozzle control is connected to the same serial communication as the weaving machine and the feed elements. The start-up stage is carried out as above. The respective feed element now informs the system how long it takes from the release signal being received to releasing the yarn. The information is stored in order to calculate an optimum time for transmitting the release signal. The weaving machine instructs the respective feed element to indicate every time a certain length, e.g. 7 cm, has been unreeled. This information (e.g. gained via yarn monitors A6) is read off simultaneously by the nozzle control.

The operation phase is started by the weaving machine giving a start signal. The respective feed element calculates optimum acceleration and speed. The reference signal is given when the reference transmitter A3 is passed. The weaving machine calculates an optimum time for a release signal and an optimum time for a message to the nozzle control to turn on the main nozzle. At the calculated time, the weaving machine transmits a message for opening the main nozzle and a release signal. The main nozzle is opened and immediately thereafter the feed element releases the yarn. The feed element measures the yarn and transmits a situation signal every time 7 cm of yarn have been unreeled. Guided by this, the nozzle control calculates optimum times for opening and closing relay nozzles and dosing off the main nozzle, and controls the nozzles accordingly. The feed element calculates the time for activating its stop element and activates the stop element. The arrival monitor A2 gives a message when the yarn passes. Each element can, condude whether the pick has been successful or not. If the pick is judged to be faulty, a message concerning this is transmitted. The weaving machine decides whether it is to stop or continue. The above sequence, reckoned from the respective feeder calculating and executing an optimum acceleration and speed sequence, is repeated a further 7 times. The weaving machine gives the pick sequence of eight picks which come after the remaining eight picks which have already been given. Repetition takes place again of the whole sequence from the phase in which the respective feed element calculates and executes optimum acceleration and speed sequences.

In the event of a yarn break upstream a feed element, the feed element concerned transmits a message "yarn break upstream" and completes its pick. The weaving machine takes suitable action for the system. The feed element informs the system whether the pick has been completed or not. In the event of yarn break downstream a feeder (A6), the feeder in question transmits a message "yarn break downstream". The weaving machine takes suitable action for the system.

Figure 10 shows a flat knitting machine C1 with associated computer system.

The machine comprises a drive C2, a finished woven piece of fabric C3, a carriage C4, a needle bed C5 and a thread guide C6. Two groups of feed elements are indicated with C7 and C8 with yarn stocks C9. Each feed element is provided with a "positive" yarn measuring device C10 and with inward and outward yarn monitors C11 and C12 respectively, a motor control element C13 and a yarn measurement element C14.

The serial digital connection C15 can be open or closed (via broken line C15'). A control unit C16 belongs to the machine. The elements described above are connected to the connection C15 via units having the same reference indications as the elements, completed with primes.

In the flat knitting machine, the stroke length may change every machine cycle. Significantly more yarn is consumed when the yarn guide C6 moves away from the feed element than when it moves towards the feed element. For a knitting breadth of 1 m, 5.5 m or 4,5 m yarn is consumed. The system for the flat knitting machine works with a start-up phase and an operation phase. In the start-up phase, the respective feed element reads its identification number from the communication system. The knitting machine indicates the speed of the yarn guide C6 and whether the yarn guide is in the end position nearest the feed element or not, and informs of those next strokes, e.g. the next 16 strokes, which are to supply yarn and what length or stroke respectively is to be given. The respective feed element calculates and stores the speed control for the coming number of picks, e.g. the coming 16 picks.

The operation phase is started with a start signal. A reference signal is received when the carriage turns. Each feed element controls the yarn feed-out according to its sequence calculated for the current pick, if necessary corrected with information from a continuously measured yarn tension. The sequence from the time when the reference signal is received when the carriage turns is repeated a further predetermined number of times, e.g. 7 times. The knitting machine then gives the data required for the pick sequence of a number of picks, e.g. eight picks, which has been given after the remaining number of picks, e.g. eight picks, which has already been given. Each feed element calculates during its idle time a suitable control sequence for the coming picks. The procedure is then repeated when the reference signal is received.

In the event of yarn break upstream the feed element, an indication is received from the inward thread monitor C11. The feed element transmits a message "yarn break upstream" and completes its pick. The feed element indicates whether the pick has been completed or not. The flat knitting machine takes suitable action for the system. In the event of yarn break downstream a feed element, the outward thread monitor C12 gives a warning. The feed element transmits a message "thread break downstream". The flat knitting machine takes suitable action for the system.

Figure 11 shows an warp-knitting machine or hosiery machine, e.g. in the form of a KETTEN machine D1 with feed elements D2, a computerized control system D3, a serial and digital connection D4, yarn stocks D5 and inward and outward yarn monitors D6 and D7. Motor control elements D8 and yarn measurement elements D9 are provided. Said elements are connected to the connection D4 via units with reference indications corresponding to the elements, completed with primes.

A warp machine yarn guides for selected needles. The yarn guides are connected together with back guide bars. Usually there are at least two yarn systems on a machine. The movements are conventionnally controlled by a pattern drum. A yarn layer sequence for laying one course can be carried out in 1/20th sec, in extreme cases i 1/40th sec. According to the invention each back guide bar, D10, D10' in Fig. 12 (two different functional positions) is displaceable in the directions of the arrow D11. In Figure 12 a unit D12 and the serial and digital communication line D13 are shown. The unit comprises communication part D14, a control element D15 for an adjustment device, a servo valve D16 controlled by control element D15, and a control cylinder D17 as part of a servo valve. A piston D18 is sensed by a position indicator D19 connected to the control element D15 via a feedback loop D20 (continuously or stepwisely). The control element is connected to a memory D15' storing the data for the movement pattern for the basic weaves, as fringe, tricot, doth, satin and velvet.

Each back guide bar is be assigned to its unit according to Figure 13. The control unit D20 of the machine D1 is like the units D21, D22, D23 etc. connected to the digital two-wire connection D24. The pressure and return lines of the servo valve are shown with D25 and D26. The machine D1 works with a start-up phase and an operation phase. The control unit D20 e.g. transmits to each unit D21, D22, D23 data to effect the basic weaves. Control unit D20 further gives information regarding which basic weave each unit is to carry out during the next stroke. The operation phase is started by a start signal for the next stroke at a time chosen so that the back guide bars come to move in unison with other machine parts. The hosiery machine further gives information regarding which basic weave each adjustment device is to carry out during the stroke following the coming stroke. If any adjustment unit fails in its sequence, this adjustment device gives a fault message. The above operation sequence is repeated.

Hosiery machines can interact with feed elements for weft inlays. These weft yarns are laid in with a yarn guide arrangement which gives a non-uniform yarn consumption during the stroke. Hence, the feed element need to know the yarn consumption pattern in every stroke and the variation of the stroke frequency during the next strokes. This information is given by control unit D20.

Astart-up phase for the above function is started by transmitting the data which each feed element requires to determine the yarn consumption during every stroke. The hosiery machine then gives data regarding the stroke frequency during the next strokes, for example the next eight strokes. The feed elements adopt an optimum start position with regard to the size of the yarn stock and motor control parameters.

In the subsequent operation phase, the machine D1 gives a start signal and starts other machine elements. It gives a signal when the yarn guide reaches the respective turning position. Each feed element adjusts yarn stock and speed. This is repeated until the fourth stroke has started. The hosiery machine transmits the necessary information regarding the four strokes which follow the next four strokes, whereupon the whole operation sequence is repeated again.

In the event of a yarn break upstream a feed element, a message "thread break upstream" is transmitted. The hosiery machine takes suitable action for the system. With a yarn break downstream, a message "thread break downstream", is transmitted at which the hosiery machine stops and takes suitable action for the system.

By means of the serial communication system possibilities are opened up for using a hydraulic system, an electric system etc. for the control. Patterns can be changed more rapidly and more simply. This applies particularly to multi-colour jet machines in which it is important that interaction takes place with a large number of units such as feeders, nozzles and shafts.

In Figure 14, a dobby (= shaft weaving machine) E1 has a shaft E2. The machine E1 is provided with a computerized control unit E3. The shaft frames are assigned a computerized control unit E4. Units E3 and E4 communicate via a two-wire serial communication connection E5. The unit controls, via first and second serial and digital connections E6 and E7, units E8, E8', E8" and E9, E9', E9" respectively. Each shaft frame is controlled by means of two units E8, E9 etc. By means of the units, the shafts E10, E11 are controlled with the aid of a servo function. Position indicators E12 and E13 respectively are arranged on the shafts. The connection units for the control units E3 and E4 to the connection E5 are indicated with E3' and E4' respectively which form communication parts.

Figure 15 shows the unit E8 in which the shaft E10 adopts different functional positions. The unit comprises a communication unit E13 and a control element E14. The control element controls a servo valve E15 of execution element E16 (hydraulic cylinder with piston E17). The shaft is displaceable in the direction of the arrows E18. A serial communication loop E16 is connected to the communication unit E13. The unit is provided with a memory element E13'. The servo valve is connected to power supply lines E19 and E20. Figure 16 shows how the units E8, E8' and E8" and execution elements are arranged in relation to the serial digital connection.

A weaving machine may have 16 shafts, but up to 36 shafts can occur. An extreme case is the Jacquard machine in which each heddle is individually controllable. By means of the serial communication system possibilities exist for using a hydraulic system, electric system etc. for the control, which means that the machines can be constructed more simply. Furthermore, patterns can be changed more rapidly and more simply. This applies particularly to multi-colour jet machines.

A large number of movement patterns can be programmed into the memory of adjustment device E13'. Each has an unambiguous identification code. The movement is started when a trigger signal is given in the serial communication E5 or E6 respectively.

The system works with a start-up phase and an operation phase. The start-up of the system is started by each adjustment device reading off its identification code. The weaving machine transmits the desired identification code to each shaft adjustment device. The weaving machine then transmits a trigger signal and then adopts the desired starting position. Finally, the weaving machine transmits identification codes for the next sequence. The operation phase is started a trigger signal at the correct angular position of the machine. The weaving machine transmits identification codes for the next sequence, whereupon repetition takes place from the trigger signal being given at the correct angular position of the machine. The position indicator E12 is connected via a feedback loop to unit E14. Feedback takes place continuously or stepwise, preferably with conspicuously frequent intervals.

## Claims

1. Apparatus for controlling, with the aid of a computerized system (2,D3), a plurality of elements which form part of a textile machine (1,A1,C1, D1,E1) and which include a plurality of yarn feed elements (5,2A,A4, C7,C8,D2), the computerized system including a plurality of units (9,10, 11,12,42,43,44,42',43',44',42",43",44",42"',43"', 44"',45,46) each of which serves a respective element and which together form a network,
**characterized in that**
said network includes connection means (26,27,26',27',39) to which each unit is connected for effecting message transmission between the units of the system serially and digitally in the form of different message types (40,41), said system including prioritizing means for ranking said message types with different priorities so as to discriminate among the messages in the message transmission effected and to guarantee a transmission time for at least three highest priority messages (40) of a maximum of 2.0 ms, each said messages (40) having predetermined short maximum length (L) which ensures that said transmission occurs within said maximum time, said messages (40) representing respective instantaneous signals which are trigger signals corresponding to respective predetermined functions of said elements of the textile machine or include messages representing stop signals for the textile machine and yarn breaks, said prioritizing means giving a message of a first message type (40) priority over a message of a second message type (41) representing a continuous operation in said apparatus.

2. Apparatus according to claim 1, **characterised in that** each unit (8,9,10,11,12) includes a communication control part (17) having first advanced digital circuit means (13,14) and second advanced digital circuit means (19) for controlling a function of the associated element, and including means (39) for causing the communication control parts (17) to function together in response to messages sent via the digital connection means (26,27).

3. Apparatus according to claim 1, **characterised in that** the units (9,10,11,12) include a communication control part (24) with a connection interface (37) to the digital connection means (26,27) and a connection interface (25) to an advanced digital circuit (23) which is provided with means for controlling a function of the associated element (7).

4. Apparatus according to claim 1, **characterised in that** each said message type (40,41) includes a frame having fields (40a-40f,41a-41c) for bits of transmission and reception functions, that at least one of said message types (40,41) includes a data field (41a), and that the frame length (L,L') has a magnitude in the order of 0,05 to 0,1 ms at a transmission speed in the order of 1 Mbit/sec to 4 Mbit/sec.

5. Apparatus according to claim 4, **characterised in that** that said prioritizing means includes means for facilitating transmission of a message, which is of the first message type and which is generated by one of said units (9-12,42-44,42'-44',42"-44",42"'-44"',45,46) during transmission of a message of the second message type (41) immediately after completion of transmission of the second message type.

6. Apparatus according to claim 1, **characterised in that** said prioritizing means includes means responsive to an attempt by two said units (42'43'44') to simultaneously transmit messages for using collision detection to give priority to one of the units.

7. Apparatus according to claim 1, **characterised in that** said prioritizing means includes means responsive to an attempt by two said units (42"-44",42'"-44"') to simultaneously transmit messages for causing detection means which utilizes respective time periods to give priority to one of the two units.

8. Apparatus according to claim 1, **characterised in that** each of said units (9-12) has a physical location close to the element (5-8) associated therewith, and that said units (9-12) are interchange able with one another and indude means for indicating for each said element a (5-8) function thereof to be controlled by the unit associated therewith.

9. Apparatus according to claim 1, **characterised in that** the units (9-12) indude means responsive to predetermined portions of said messages (40,41) which each identify one of said units (9-12) for causing the unit to be identified with each said predetermined portion to receive and store the message containing the predetermined portion.

10. Apparatus according to claim 1, **characterised in that** each said element (A4) is connected to transmitter means (A3) for outputting date representing a parameter depedendent on a function of the element which is controlled by the unit associated therewith.

11. Appatatus according to claim 1, **characterised in that** one of said elements (A4) includes a motor (A8) and the unit (A8',A8") associated therewith includes means responsive to a message sent through the connection means (A16,A15) and containing control information representative of a weaving pattern programmed in the system for effecting a predetermined control of the motor of the element.

12. Apparatus according to claim 1, **characterised in that** one of said elements (A4) includes a motor (A8) and the unit (A8',A8") associated therewith includes means responsive to a message sent through the connection means (A15,A16) and containing control information which is interrelated to control information in messages sent to other units (A8',A8") for effecting a predetermined control of the motor (A8) of the element A4) in relation to other said elements (A4).

13. Apparatus according to claim 1, **characterised in that** one of said elements includes a motor (A8) and the unit (A8',A8") associated therewith includes means responsive to a message sent through the connection means (A15,A16) and containing control information for effecting a predetermined control of the motor (A8) of the element (A4) which constitutes one of preparatory acceleration and deceleration so that the motor achieves a required speed before coming to operation for execution of an actual function of the element (A4).

14. Apparatus according to claim 1, **characterised in that** the units and the connection means communicate with two logic levels, the first of which is dominant and the second non-dominant and that said prioritizing means includes means for causing two of said units to simultaneously begin transmitting on a common conductor messages beginning with a priority portion, causing each of the two units to compare the bits it is transmitting with bits carried by the connecting means, and for causing a first unit which has more introductory dominant bits in its priority portion than a second unit to receive priority over the second unit by having the second unit terminate its transmission upon detecting a dominant bit from the connecting means when the second unit is attempting to transmit a non-dominant bit.

15. Apparatus according to claim 14, **characterised in that** each of said units has means for detecting a start of a transmission by another of said units by a predetermined time following the start of the transmission.

16. Apparatus according to claim 1, **characterised in that** said connection means (39,56,60) includes an optical coupling.

17. Apparatus according to claim 1, **characterised in that** said prioritization means is responsive to first, second and third messages, respectively representing different instantaneous signals for giving the first message priority over the second message and the second message priority over the third message.

18. Apparatus according to claim 17, **characterised in that** the first message represents yarn breaks indicated by sensing means (A5,A6) in the textile machine (A1), the second message representing an output signal of an arrival monitor (A2) in the textile machine (A1) and the third message represents a pick signal of the textile machine (A1).

19. Apparatus according to claim 17, **characterised in that** said prioritizing means includes means responsive to the appearance of the first message for thereafter inhibiting the second and third type messages until the occurance of a predetermined condition.

20. Apparatus according to claim 1, **characterised in that** the system comprises means for successfully carrying out a start-up phase and an operation phase, and that the system comprises means operative during the start-up phase for sending each element (5-8) via its associated unit (9-12), an identification number, and that the textile machine is provided with means for sending functional prerequisites for the elements via the units associated therewith.

21. Apparatus according to claim 20, **characterised by** means for transmitting through said connection means, during the operation phase, selected instantaneous signals which are respectively generated by a start signal of the textile machine, by a reference transmitter (A3) of the textile machine which senses speed, an activation part of one of said elements, and by an arrival monitor (A2).

## Patentansprüche

1. Vorrichtung zum Steuern, mit Hilfe eines computerisierten Systems (2,D3), einer Vielzahl von Elementen, die Teil einer Textilmaschine (1,A1,C1,D1,E1) sind und die eine Vielzahl von Fadenlieferelementen (5,2A, A4,C7,C8,D2) umfassen, wobei das computerisierte System eine Vielzahl von Einheiten (9, 10, 11, 12, 42, 43, 44, 42', 43', 44', 42", 43", 44", 42"', 43"', 44"', 45, 46) aufweist, von denen jede jeweils ein Element bedient, und die miteinander ein Netzwerk formen,
**dadurch gekennzeichnet, daß**
das Netzwerk Anschluß-Verbindungseinrichtungen (26, 27, 26', 27', 39) aufweist, mit denen jede Einheit verbunden ist zum Bewerkstelligen einer seriellen und digitalen Nachrichtenübertragung zwischen den Einheiten des Systems in Form unterschiedlicher Nachrichten-Typen (40,41), das System Priorisierungseinrichtungen zum Einordnen der Nachrichten-Typen unter unterschiedliche Prioritäten enthält, um zwischen den Nachrichten in der bewerkstelligten Nachrichtenübertragung zu diskriminieren und eine Übertragungszeit für zumindest drei Nachrichten (40) mit der höchsten Priorität mit einem Maximum von 2,0 ms zu garantieren,
wobei jede dieser Nachrichten (40) eine vorbestimmte, kurze Maximallänge (L) hat, mit der sicherstellbar ist, daß die Übertragung innerhalb der maximalen Zeit stattfindet,
und die Nachrichten (40) jeweils unmittelbare Signale repräsentieren, die mit jeweils vorbestimmten Funktionen der Elemente der Textilmaschine korrespondierende Auslösesignale sind, oder Nachrichten umfassen, die Stopsignale für die Textilmaschine und Fadenbrüche repräsentieren, daß die Priorisierungseinrichtungen (26,26') einem ersten Nachrichtentypus (40) Priorität über einen zweiten Nachrichtentypus (41) geben, der eine andauernde Operation der Vorrichtung repräsentiert.

2. Vorrichtung nach Anspruch 1, **dadurch gekennzeichnet**, daß jede Einheit (8,9,10, 11,12) einen Kommunikationssteuerteil (17) aufweist, der erste hochwertige digitale Schaltkreiseinrichtungen (13,14) und zweite hochwertige digitale Schaltkreiseinrichtungen (19) zum Steuern einer Funktion des zugehörigen Elements aufweist und Einrichtungen (39) enthält, mit denen die Kommunikationssteuerteile (17) zu einer gemeinsamen Funktion bringbar sind unter Ansprechen auf mittels der digitalen Verbindungseinrichtungen (26,27) gesendete Nachrichten.

3. Vorrichtung nach Anspruch 1, **dadurch gekennzeichnet,** daß die Einheiten (9,10, 11,12) einen Kommunikationssteuerteil (24) mit einer Verbindungsschnittstelle (37) zu den digitalen Anschluß-Verbindungseinrichtungen (26,27) und einer Verbindungsschnittstelle (25) zu einem hochwertigen digitalen Schaltkreis (23) aufweisen, der mit Einrichtungen versehen ist zum Steuern einer Funktion des zugeordneten Elementes (7).

4. Vorrichtung nach Anspruch 1, **dadurch gekennzeichnet**, daß jeder Nachrichten-Typus (40,41) einen Rahmen mit Feldern (40a-40f, 41a-41c) für Transmissions-Bits und Empfangsfunktionen aufweist, daß wenigstens ein Nachrichten-Typus (40,41) ein Datenfeld (41a) aufweist, und daß die Rahmenlänge (L,L') eine Größe im Bereich von 0,05 bis 0,1 ms bei einer Übertragungsgeschwindigkeit in einen Bereich von 1Mbit/s bis 4Mbit/s hat.

5. Vorrichtung nach Anspruch 4, dadurch gekennzeichnet, daß die Priorisierungseinrichtungen Einrichtungen zum Erleichtern der Übertragung einer Nachricht enthalten, die dem ersten Nachrichtentypus angehört und von einer der Einheiten (9-12,42-44,42'- 44',42"-44",42"'-44"',45,46) während der Übertragung einer Nachricht des zweiten Typus (41) erzeugt wird, und zwar unmittelbar nach Beendigung der Übertragung des Nachricht des zweiten Typus.

6. Vorrichtung nach Anspruch 1, **dadurch gekennzeichnet**, daß die Priorisierungseinrichtungen Einrichtungen aufweisen, die auf einen Versuch zweier der Einheiten (42',43',44') ansprechen, gleichzeitig Nachrichten zu übertragen, und zwar unter Verwendung einer Kollisionsfeststellung, um einer der Einheiten Priorität über die andere zu geben.

7. Vorrichtung nach Anspruch 1, **dadurch gekennzeichnet**, daß die Priorisierungseinrichtungen Einrichtungen aufweisen, die auf einen Versuch zweier der Einheiten (42"-44",42"'-44"') einer gleichzeitigen Nachrichtenübertragung ansprechen und Abtasteinrichtungen veranlassen, unter Verwendung entsprechender Zeitperioden einer der beiden Einheiten Priorität zu gewähren.

8. Vorrichtung nach Anspruch 1, **dadurch gekennzeichnet**, daß jede der Einheiten (9-12) an einer physikalisch nahe bei oder in dem zugehörigen Element (5-8) liegenden Stelle angeordnet ist, und daß die Einheiten (9-12) untereinander austauschbar sind und Einrichtungen besitzen, zum Anzeigen einer Funktion jedes der Elemente (5-8), das durch die zugehörige Einheit steuerbar ist.

9. Vorrichtung nach Anspruch 1, **dadurch gekennzeichnet**, daß die Einheiten (9-12) auf vorbestimmte Abschnitte der Nachrichten (40,41) ansprechende Einrichtungen umfassen, wobei jeder der Abschnitte eine der Einheiten (9-12) identifiziert, um diese Einheit mit dem jeweiligen Abschnitt so identifiziert zu haben, daß die Einheit die Nachricht empfängt und speichert, die einen vorbestimmten Abschnitt enthält.

10. Vorrichtung nach Anspruch 1, **dadurch gekennzeichnet**, daß jedes der Elemente (A4) mit einer Übertragungseinrichtung (A3) verbunden ist zum Herausgeben von Daten, die einen Parameter repräsentieren, der von einer Funktion desjenigen Elementes abhängt, das durch die zugeordnete Einheit steuerbar ist.

11. Vorrichtung nach Anspruch 1, **dadurch gekennzeichnet,** daß eines der Elemente (A4) einen Motor (AS) und daß die zugeordnete Einheit (A8',A8") auf eine über die Verbindungseinrichtungen (A16,A15) übertragene Nachricht ansprechende Mittel enthält, wobei diese Nachricht ein in dem System programmiertes Webmuster repräsentierende Steuerinformationen enthält, mit denen eine vorbestimmte Steuerung des Motors des Elementes durchführbar ist.

12. Vorrichtung nach Anspruch 1, **dadurch gekennzeichnet**, daß eines der Elemente (A4) einen Motor (A8) und die zugeordnete Einheit (A8',A8") auf eine über die Verbindungseinrichtungen (A15,A16) gesendete Nachricht ansprechende Einrichtungen enthält, wobei die Nachricht eine Steuerinformation enthält, die mit in an andere Einheiten (A8',A8") gesendeten Nachrichten enthaltenen Steuerinformationen in einer Interrelation steht, um bei dem Motor (A8) des Elementes (A4) eine vorbestimmte Steuerung zu bewirken, die zu den anderen Elementen (A4) in einer Beziehung steht.

13. Vorrichtung nach Anspruch 1, **dadurch gekennzeichnet**, daß eines der Elemente einen Motor (A8) und die zugeordnete Einheit (AS',AS") Einrichtungen aufweist, die auf eine über die Verbindungseinrichtungen (A15,A16) gesendete Nachricht ansprechende Mittel aufweist, wobei die Nachricht eine Steuerinformation zum Bewirken einer vorbestimmten Steuerung des Motors (A8) des Elementes (A4) enthält, und wobei diese Steuerung konstituiert wird durch eine vorbereitende Beschleunigung und/oder Verzögerung, so daß der Motor eine erforderliche Drehzahl bereits erreicht, ehe es bei einer Operation zu einer Durchführung einer tatsächlichen Funktion des Elementes (A4) kommt.

14. Vorrichtung nach Anspruch 1, **dadurch gekennzeichnet**, daß die Einheiten und Verbindungseinrichtungen unter Benutzung zweier logischer Levels kommunizieren, von denen das erste dominant und das zweite nicht dominant ist, und daß die Priorisierungseinrichtungen Einrichtungen enthalten, zum Veranlassen zweier der Einheiten zum gleichzeitig beginnenden Übertragen mit je einem Prioritatsabschnitt anfangender Nachrichten auf einem gemeinsamen Leiter, und zum Veranlassen der beiden Einheiten, die von ihnen selbst übertragenen Bits mit von den Verbindungseinrichtungen übertragenen Bits zu vergleichen und einer ersten Einheit, die mehr einleitende dominante Bits in dem Prioritätsabschnitt ihrer Nachricht hat, als die zweite Einheit, die Priorität über die zweite Einheit zu erhalten, indem die zweite Einheit veranlaßt wird, ihre Übertragung nach Feststellen eines dominanten Bits aus den Verbindungseinrichtungen beendet, sobald die zweite Einheit versucht, ein nicht dominantes Bit zu übertragen.

15. Vorrichtung nach Anspruch 14, **dadurch gekennzeichnet**, daß jede der Einheiten Einrichtungen zum Detektieren eines Startes einer Übertragung einer anderen Einheit innerhalb einer vorherbestimmten Zeit nach dem Beginn der Übertragung aufweist.

16. Vorrichtung nach Anspruch 1, **dadurch gekennzeichnet**, daß die Verbindungseinrichtungen (39,56,60) eine optische Kupplung aufweisen.

17. Vorrichtung nach Anspruch 1, **dadurch gekennzeichnet**, daß die Priorisierungseinrichtungen ansprechen auf erste, zweite und dritte Nachrichten, die jeweils unterschiedliche augenblickliche Signale repräsentieren, und zwar zum Verleihen einer Priorität für die erste Nachricht über die zweite Nachricht und einer Priorität für die zweite Nachricht über die dritte Nachricht.

18. Vorrichtung nach Anspruch 17, **dadurch gekennzeichnet**, daß die erste Nachricht durch Abtasteinrichtungen (A5,A6) in der Textilmaschine (Al) angezeigte Fadenbrüche repräsentiert, daß die zweite Nachricht ein Ausgangssignal eines Faden-Ankunfts-Überwachers (A2) in der Textilmaschine (Al) repräsentiert, und daß die dritte Nachricht ein Schußsignal der Textilmaschine (Al) repräsentiert.

19. Vorrichtung nach Anspruch 17, **dadurch gekennzeichnet**, daß die Priorisierungseinrichtungen auf das Auftreten der ersten Nachricht ansprechende Einrichtungen umfassen, mit denen danach bis zum Eintreten einer vorbestimmten Kondition die zweiten und dritten Nachrichtentypen inhibierbar bzw. unterdrückbar sind.

20. Vorrichtung nach Anspruch 1, **dadurch gekennzeichnet**, daß das System Einrichtungen zum aufeinanderfolgenden Ausführen einer Anlaufphase und einer Betriebsphase aufweist, und daß das System Einrichtungen enthält, mit denen während der Anlaufphase über die zugeordnete Einheit (9-12) an jedes Element (5-8) eine Identifikationsnummer zustellbar ist, und daß die Textilmaschine mit Einrichtungen zum Aussenden funktioneller Voraussetzungen über die Einheiten an die diesen zugeordneten Elemente ausgestattet ist.

21. Vorrichtung nach Anspruch 20, gekennzeichnet durch Einrichtungen zum Übertragen ausgewählter augenblicklicher Signale durch die Verbindungseinrichtungen und während der Betriebsphase, wobei diese Signale erzeugt werden können durch ein Startsignal der Textilmaschine, durch einen Referenztransmitter (A3) der Textilmaschine, der deren Drehzahl abtastet, durch einen Betätigungsteil eines der Elemente, und durch einen Fadenankunftsüberwacher (A2).

## Revendications

1. Dispositif pour commander, à l'aide d'un système informatisé (2, D3), une pluralité d'éléments qui font partie d'une machine textile (1, A1, C1, D1, E1) et qui comprennent une pluralité d'éléments (5, 2A, A4, C7, C8, D2) d'alimentation du fil, le système informatisé comprenant une pluralité d'unités (9, 10, 11, 12, 42, 43, 44, 42', 43', 44', 42", 43", 44", 42"', 43"', 44"', 45, 46), dont chacun dessert un élément respectif et qui forment ensemble un réseau, caractérisé en ce que
ledit réseau comprend des moyens de connexion (26, 27, 26', 27', 39) auxquels chaque unité est connectée pour effectuer une transmission de messages entre les unités du système, en sériel et en numérique sous la forme de différents types de messages (40, 41), ledit système comprenant des moyens d'attribution de priorité servant à classer lesdits types de messages selon différentes priorités de manière à discriminer parmi les messages inclus dans la transmission de messages effectuées et à garantir un temps de transmission pour au moins trois messages (40) de la priorité la plus haute, d'une langueur maximum de 2,0 ms, chacun desdits messages (40) ayant une longueur maximum courte prédéterminée (L) qui garantit que ladite transmission se produit dans les limites dudit temps maximum, lesdits messages (40) représentant des signaux instantanés respectifs qui sont des signaux de déclenchement correspondant à des fonctions prédéterminées respectives desdits éléments de la machine textile ou qui comprennent des messages représentant des signaux d'arrêt pour la machine textile et des ruptures de fil, lesdits moyens d'attribution de priorité donnant à un message d'un premier type de message (40) la priorité sur un message d'un deuxième type de message (41) qui représente une opération continue dans ledit dispositif.

2. Dispositif selon la revendication 1, caractérisé en ce que chaque unité (8, 9, 10, 11, 12) comprend une partie (17) de commande de la communication ayant des premiers moyens de circuit numérique avancés (13, 14) et des deuxièmes moyens de circuit numérique avancés (19) destinés à commander une fonction de l'élément qui leur est associé, et comprenant des moyens (39) servant à faire fonctionner les parties (17) de commande de la communication ensemble en réponse à des messages envoyés à travers les moyens de connexion numériques (26, 27).

3. Dispositif selon la revendication 1, caractérisé en ce que les unités (9, 10, 11, 12) comprennent une partie de commande de communication (24) comprenant elle-même une interface ce connexion (37) sur les moyens de connexion numériques (26, 27) et une interface de connexion (25) sur un circuit numérique avancé (23) qui est muni de moyens servant à commander une fonction de l'élément correspondant (7).

4. Dispositif selon la revendication 1, caractérisé en ce que chaque type de message (40, 41) comprend un bloc présentant des zones (40a à 40f, 41a à 41c) pour des bits ce transmission et des fonctions de réception, en ce qu'au moins un desdits types de messages (40, 41) comprend une zone de données (41a) et en ce que la longueur (L, L') du bloc a une valeur de l'ordre de 0,05 à 0,1 ms à une vitesse de transmission de l'ordre de 1 Mbit/s à 4 Mbit/s.

5. Dispositif selon la revendication 4, caractérisé en ce que lesdits moyens d'attribution de priorité comprennent des moyens pour faciliter la transmission d'un message, qui est du premier type de message et qui est engendré par l'une desdites unités (9 à 12, 42 à 44, 42' à 44', 42" à 44", 42"' à 44"', 45, 46) pendant la transmission d'un message du deuxième type de message (41) immédiatement après l'exécution de la transmission du deuxième type de message.

6. Dispositif selon la revendication 1, caractérisé en ce que lesdits moyens d'attribution de priorité comprennent des moyens qui répondent à une tentative des deux dites unités (42', 43', 44') de transmettre simultanément des messages en utilisant une détection de collision pour attribuer la priorité à l'une des unités.

7. Dispositif selon la revendication 1, caractérisé en ce que lesdits moyens d'attribution de priorité comprennent des moyens qui répondent à une tentative des deux dites unités (42" à 44", 42"' à 44"') de transmettre simultanément des messages en amenant des moyens de détection qui utilisent des périodes de temps respectives à donner la priorité à l'une des deux unités.

8. Dispositif selon la revendication 1, caractérisé en ce que chacune desdites unités (9 à 12) est placée physiquement à proximité de l'élément (5 à 8) qui lui est associé et en ce que lesdites unités (9 à 12) sont interchangeables entre elles et comprennent des moyens servant à indiquer pour chacun desdits éléments (5 à 8) une fonction de cet élément qui doit être commandée par l'unité qui lui est associée.

9. Dispositif selon la revendication 1, caractérisé en ce que les unités (9 à 12) comprennent des moyens qui répondent à des parties prédéterminées desdits messages (40, 41) dont chacune identifie l'une desdites unités (9 à 12) en faisant en sorte que l'unité qui doit être identifiée avec chacune desdites parties prédéterminées reçoive et mémorise le message comprenant la partie prédéterminée.

10. Dispositif selon la revendication 1, caractérisé en ce que chacun desdits éléments (A4) est connecte à un moyen transmetteur (A3) pour émettre en sortie des données représentant un paramètre qui dépend d'une fonction de l'élément qui est commandée par l'unité qui lui est associée.

11. Dispositif selon la revendication 1, caractérisé en ce que l'un desdits éléments (A4) comprend un moteur (A8) et l'unité (A8', A8") qui lui est associée comprend des moyens qui répondent à un message envoyé à travers les moyens de connexion (A16, A15) et contenant une information de commande représentative d'un motif de tissage programmé dans le système en exécutant une commande prédéterminée du moteur de l'élément.

12. Dispositif selon la revendication 1, caractérisé en ce que l'un desdits éléments (A4) comprend un moteur (A8) et l'unité (A8', A8") qui lui est associée comprend des moyens qui répondent à un message envoyé à travers les moyens de connexion (A15, A16) et contenant une information de commande qui est liée à l'information de commande contenue dans des messages envoyés à d'autres unités (A8', A8") en effectuant une commande prédéterminée du moteur (A8) de l'élément (A4) en liaison avec lesdits autres éléments (A4).

13. Dispositif selon la revendication 1, caractérisé en ce qu'un desdits éléments comprend un moteur (A8) et l'unité (A8', A8") associée à ce moteur comprend des moyens qui répondent à un message envoyé à travers les moyens de connexion (A15, A16) et contenant une information de commande en exécutant une commande prédéterminée du moteur (A8) de l'élément (A4) qui constitue une accélération ou décélération préparatoire de façon que le moteur prenne une vitesse requise avant d'entrer en action pour m'exécution d'une fonction réelle de l'élément (A4).

14. Dispositif selon la revendication 1, caractérisé en ce que les unités et les moyens de connexion communiquent avec deux niveaux logiques, dont le premier est dominant et le deuxième non dominant, et en ce que les moyens d'attribution de priorité comprennent des moyens servant à amener les deux dites unités à commencer simultanément à transmettre, sur un conducteur commun, des messages commençant par une partie de priorité, à amener chacune des deux unités à comparer les bits qu'elle est en train de transmettre à des bits transportés par les moyens de connexion et à amener une première unité qui a dans sa partie de priorité des bits d'introduction plus dominants que ceux d'une deuxième unité à recevoir la priorité sur la deuxième unité en faisant en sorte que la deuxième unité interrompre sa transmission en réponse à la détection d'un bit dominant en provenance des moyens de connexion lorsque la deuxième unité tente de transmettre un bit non dominant.

15. Dispositif selon la revendication 14, caractérisé en ce que chacune desdites unités a des moyens servant à détecter le début d'une transmission exécutée par une autre desdites unités à un instant prédéterminé qui suit le début de la transmission.

16. Dispositif selon la revendication 1, caractérisé en ce que lesdits moyens de connexion (39, 56, 60) comprennent un couplage optique.

17. Dispositif selon la revendication 1, caractérisé en ce que lesdits moyens d'attribution de priorité répondent à des premier, deuxième et troisième messages qui représentent respectivement différents signaux instantanés en donnant la priorité au premier message sur le deuxième message et en donnant la priorité au deuxième message sur le troisième message.

18. Dispositif selon la revendication 17, caractérisé en ce que le premier message représente des ruptures de fil signalées par des moyens capteurs (A5, A6) inclus dans la machine textile (A1), le deuxième message représente un signal de sortie d'un moniteur d'arrivée (A2) inclus dans la machine textile (A1) et le troisième message représente un signal de duite de la machine textile (A1).

19. Dispositif selon la revendication 17, caractérisé en ce que lesdits moyens d'attribution de priorité comprennent des moyens qui répondent à l'apparence du premier message en inhibant ensuite les messages des deuxième et troisième types jusqu'à l'apparition d'un état prédéterminé.

20. Dispositif selon la revendication 1, caractérisé en ce que le système comprend des moyens servant à exécuter avec succès une phase de démarrage et une phase de fonctionnement et en ce que le système comprend des moyens qui agissent pendant la phase de démarrage en envoyant un numéro d'identification à chaque élément (5 à 8) à travers l'unité (9 à 12) qui lui est associée, et en ce que la machine textile est équipée de moyens servant à envoyer des conditions fonctionnelles requises pour les éléments à travers les unités qui leur sont associées.

21. Dispositif selon la revendication 20, caractérisé par des moyens servant à transmettre à travers lesdits moyens de connexion, pendant la phase de fonctionnement, des signaux instantanés sélectionnés qui sont respectivement engendrés par un signal de démarrage de la machine textile, par un transmetteur de référence (A3) de la machine textile qui détecte la vitesse, une partie d'activation de l'un desdits éléments, et par un moniteur d'arrivée (A2).
